(19) **Europäisches Patentamt / European Patent Office / Office européen des brevets**

(11) **EP 4 029 827 B1**

(12) **EUROPEAN PATENT SPECIFICATION**

(45) Date of publication and mention of the grant of the patent:
**28.02.2024  Bulletin 2024/09**

(21) Application number: **20863482.4**

(22) Date of filing: **03.09.2020**

(51) International Patent Classification (IPC):
*C01B 25/14* (2006.01)    *H01B 13/00* (2006.01)
*H01B 1/10* (2006.01)    *H01B 1/06* (2006.01)
*H01M 10/0562* (2010.01)    *H01M 10/052* (2010.01)
*H01M 4/62* (2006.01)    *H01M 4/13* (2010.01)
*H01M 4/04* (2006.01)

(52) Cooperative Patent Classification (CPC):
**H01M 10/0562; C01B 25/14; H01B 1/06;**
**H01B 1/10; H01B 13/00; H01M 4/13; H01M 4/628;**
**H01M 10/052;** H01M 4/0407; H01M 2300/0068;
H01M 2300/008; Y02E 60/10

(86) International application number:
**PCT/JP2020/033433**

(87) International publication number:
**WO 2021/049414 (18.03.2021 Gazette 2021/11)**

(54) **SULFIDE SOLID ELECTROLYTE**

SULFIDFESTSTOFFELEKTROLYT

ÉLECTROLYTE SOLIDE AU SULFURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2019  JP 2019165780**

(43) Date of publication of application:
**20.07.2022  Bulletin 2022/29**

(73) Proprietor: **Mitsui Mining & Smelting Co., Ltd.**
**Shinagawa-ku**
**Tokyo 141-8584 (JP)**

(72) Inventors:
• **TAKAHASHI, Tsukasa**
  **Ageo-shi, Saitama 362-0021 (JP)**
• **CHIKUMOTO, Takashi**
  **Ageo-shi, Saitama 362-0021 (JP)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
WO-A1-2015/001818    JP-A- 2013 030 440
JP-A- 2013 033 659    JP-A- 2016 207 354
JP-A- 2017 210 393    JP-A- 2018 095 522
US-A1- 2007 160 911

• FAN WU ET AL: "Advanced sulfide solid electrolyte by core-shell structural design", NATURE COMMUNICATIONS, vol. 9, no. 4037, 2 October 2018 (2018-10-02), XP055615492, DOI: 10.1038/s41467-018-06123-2
• ZHANG QING ET AL: "Sulfide-Based Solid-State Electrolytes: Synthesis, Stability, and Potential for All-Solid-State Batteries", ADVANCED MATERIALS, vol. 31, no. 44, 22 August 2019 (2019-08-22), page 1901131, XP55961548, DE ISSN: 0935-9648, DOI: 10.1002/adma.201901131 Retrieved from the Internet: URL:https://onlinelibrary.wiley.com/doi/full-xml/10.1002/adma.201901131>

EP 4 029 827 B1

- **PARK MANSOO ET AL: "Microscopic Analysis of High Lithium-Ion Conducting Glass-Ceramic Sulfides", JOURNAL OF THE KOREAN CERAMIC SOCIETY, vol. 53, no. 5, 30 September 2016 (2016-09-30), pages 568-573, XP55961576, ISSN: 1229-7801, DOI: 10.4191/kcers.2016.53.5.568 Retrieved from the Internet: URL:http://jkcs.or.kr/journal/view.php?doi =10.4191/kcers.2016.53.5.568>**

**Description**

Technical Field

The present invention relates to a sulfide solid electrolyte. Also, the present invention relates to an electrode mixture and a solid-state battery that contain the solid electrolyte. Furthermore, the present invention relates to a method for producing the solid electrolyte.

Background Art

Solid-state batteries do not use flammable organic solvents, and thus allow for simplification of safety devices. Moreover, solid-state batteries not only can be excellent in terms of production cost and productivity but also have the characteristic of being able to be stacked in series within a cell to achieve a higher voltage. As a type of solid electrolyte that is used in a solid-state battery, a sulfide solid electrolyte has been researched. For example, Patent Literature 1 discloses a sulfide solid electrolyte compound for a lithium ion battery, the sulfide solid electrolyte containing a cubic argyrodite-type crystal layer and being represented by a compositional formula: $Li_{7-x+y}PS_{6-x}Cl_{x+y}$. In the compositional formula, x and y satisfy $0.05 \leq y \leq 0.9$ and $-3.0x + 1.8 \leq y \leq -3.0x + 5.7$.

Citation List

Patent Literature

Patent Literature 1: US 2017/352916A1
Patent Literature 2: JP 2013 030440 discloses a solid electrolyte including a sulfide-based solid electrolyte of an Li-P-S system and an Li-P-S-O system represented by composition formula: $LiPSO$ ($0.01 \leq x \leq 1.42$ and $0.01 \leq z \leq 1.55$ ), and the sulfide-based solid electrolyte has peaks of X-ray diffraction around diffraction angles ($2\theta/CuK\alpha$) of at least 12.9°, 14.4°, 15.2°, 18.0°, 20.5-22.0°, 24.2°, 25.0°, 28.0° and 30.6°. Another solid electrolyte disclosed includes a sulfide-based solid electrolyte represented by composition formula: $LiPS$ ($0.06 \leq x \leq 0.08$), and the sulfide-based solid electrolyte has peaks of X-ray diffraction around diffraction angles ($2\theta/CuK\alpha$) of at least 13.3°, 14.75°, 15.3°, 18.0°, 21.0-21.7°, 24.2°, 25.4°, 28.4° and 30.6°.
Literature 1: Fan We et al., Nature Comminications, vol. 9, no. 4037, 2018, DOI: 10.1038/141467-018-06123-2, discloses a solid electrolyte of formula $Li_{9.54}Si_{1.74}P_{1.44}S_{11.7}Cl_{0.3}$.
Literature 2: Zhang Qing et al., Advanced Materials, vol. 31, no. 44, 2019, page 1901131, DOI:10.1002/adma.201901131, discloses Li-P-S-based sulfide-based solid-state electrlytes.

Summary of Invention

Sulfide solid electrolytes are known to easily react with water in air and produce hydrogen sulfide. Although the sulfide solid electrolyte disclosed in Patent Literature 1 above has a satisfactory level of lithium ionic conductivity, there is room for improvement in preventing the formation of hydrogen sulfide.
Therefore, an object of the present invention is to improve a sulfide solid electrolyte, and more particularly to provide a sulfide solid electrolyte that can reduce the formation of hydrogen sulfide.
The present invention provides a sulfide solid electrolyte that has peak A at $2\theta = 20.7° \pm 0.5°$ in an X-ray diffraction pattern obtained by performing X-ray diffraction measurement using $CuK\alpha1$ radiation,

peak B at $2\theta = 25.4° \pm 1.0°$ in the X-ray diffraction pattern obtained by performing X-ray diffraction measurement using $CuK\alpha1$ radiation, and
peak C at $2\theta = 22.0° \pm 0.5°$ in the X-ray diffraction pattern obtained by performing X-ray diffraction measurement using $CuK\alpha1$ radiation,
wherein a value of a ratio of $I_C$ to $I_B$, $I_C/I_B$, is more than 0 and 2.0 or less, where $I_B$ is an intensity of peak B, and $I_C$ is an intensity of peak C, and
wherein the sulfide solide electrolyte comprises elemental lithium (Li), elemental phosphorus (P), elemental sulfur (S), an elemental halogen (X), and elemental oxygen (O).

Also, the present invention provides, as a preferred method for producing the above-described sulfide solid electrolyte, a method for producing a sulfide solid electrolyte, the method including:

a mixing step of mixing a sulfide electrolyte raw material <u>that contains a crystalline phase having an argyrodite-type crystal structure</u> with a lithium halide hydrate to obtain a mixture; and
a heating step of heating the mixture to 80°C or more in a vacuum.

Brief Description of Drawings

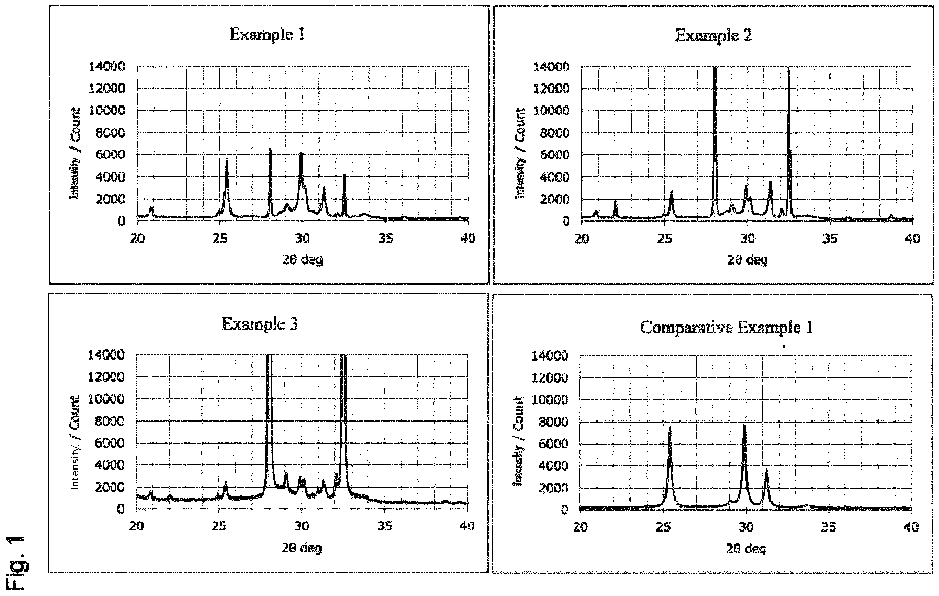

[Fig. 1] Fig. 1 shows charts individually showing XRD measurement results of sulfide solid electrolytes obtained in examples and a comparative example.

Description of Embodiments

Hereinafter, the present invention will be described based on preferred embodiments thereof. The present invention relates to a sulfide solid electrolyte. The sulfide solid electrolyte (hereinafter also referred to simply as "solid electrolyte") of the present invention has lithium ionic conductivity. The level of the lithium ionic conductivity of the solid electrolyte of the present invention will be described later.

The solid electrolyte of the present invention contains sulfur as a constituent element thereof. The lithium ionic conductivity of the solid electrolyte of the present invention results from the sulfide solid electrolyte. Various sulfide solid electrolytes that have lithium ionic conductivity are known in the art, and those various sulfide solid electrolytes can be used in the present invention without limitation. In particular, from the viewpoint of reducing the reaction resistance between the sulfide solid electrolyte and an active material, the sulfide solid electrolyte contains elemental lithium (Li), elemental phosphorus (P), elemental sulfur (S), and an elemental halogen (X). From the viewpoint of reducing the reaction resistance between the sulfide solid electrolyte and an active material even further, it is advantageous that the elemental halogen contains at least one of chlorine, bromine, and iodine. Such a sulfide solid electrolyte may also contain another element in addition to elemental lithium, elemental phosphorus, elemental sulfur, and the elemental halogen. For example, a portion of elemental lithium may be replaced with another elemental alkali metal, a portion of elemental phosphorus may be replaced with another elemental pnictogen, and a portion of elemental sulfur may be replaced with another elemental chalcogen.

When the solid electrolyte of the present invention is subjected to X-ray diffraction (hereinafter also referred to as "XRD") measurement using CuK$\alpha$1 radiation, diffraction peak A is observed within a range of $2\theta = 20.7° \pm 0.5°$ in an XRD diffraction pattern. As a result of research by the inventors of the present invention, it was found that a solid electrolyte for which diffraction peak A is observed reduces the formation of hydrogen sulfide when compared with a conventional solid electrolyte.

From the viewpoint of even more markedly realizing the above-described advantageous effects, it is preferable that, when the solid electrolyte of the present invention is subjected to XRD measurement using CuK$\alpha$1 radiation, diffraction peak A is observed within a range of $2\theta = 20.7° \pm 0.4°$, more preferably $20.7° \pm 0.3°$, even more preferably $20.7° \pm 0.2°$, and yet even more preferably $20.7° \pm 0.1°$, because the formation of hydrogen sulfide is reduced even further.

Which crystal structure diffraction peak A, which is observed within the range of $2\theta = 20.7° \pm 0.5°$ in XRD measurement using CuK$\alpha$1 radiation, is derived from is currently not clear. However, even though the cause to which diffraction peak A is attributed cannot be identified, the inventors of the present invention confirmed, as a result of research by the inventors of the present invention, that a sulfide solid electrolyte for which diffraction peak A is observed within the above-described $2\theta$ range reduces the formation of hydrogen sulfide when compared with a sulfide solid electrolyte for which diffraction peak A is not observed. This has been demonstrated by examples that will be described later.

When the solid electrolyte of the present invention is subjected to XRD measurement using CuK$\alpha$1 radiation, diffraction peak B is observed within a range of $2\theta = 25.4° \pm 1.0°$ in the XRD diffraction pattern, in addition to the diffraction peak observed in the above-described range of angles. This solid electrolyte reduces the formation of hydrogen sulfide even further. Moreover, with this solid electrolyte, the reaction resistance between the solid electrolyte and an active material is low. As a result, a solid-state battery that contains the solid electrolyte of the present invention has a high discharge capacity. From the viewpoint of even more markedly realizing these effects, it is preferable that diffraction peak B of the solid electrolyte of the present invention is observed within a range of $2\theta = 25.4° \pm 0.8°$, even more preferably $25.4° \pm 0.6°$, yet even more preferably $25.4° \pm 0.4°$, and yet even more preferably $25.4° \pm 0.2°$.

When both diffraction peak A and diffraction peak B are observed for the solid electrolyte of the present invention, it is preferable that the value of the ratio of $I_A$ to $I_B$, $I_A/I_B$, wherein $I_A$ is the intensity of diffraction peak A and $I_B$ is the intensity of diffraction peak B, is more than 0, because the formation of hydrogen sulfide is reduced yet even further. Also, a solid-state battery that contains this solid electrolyte is preferable because the reaction resistance between the solid electrolyte and the active material is reduced even further and the discharge capacity is increased even more. From the viewpoint of even more markedly realizing these advantageous effects, the value of $I_A/I_B$ is, for example, more preferably 0.05 or more, and even more preferably 0.1 or more. On the other hand, the value of $I_A/I_B$ is, for example, preferably 1.0 or less, more preferably 0.7 or less, even more preferably 0.5 or less, and yet even more preferably 0.4 or less.

When the solid electrolyte of the present invention is subjected to XRD measurement using CuK$\alpha$1 radiation, diffraction peak C is observed within a range of $2\theta = 22.0° \pm 0.5°$ in the XRD diffraction pattern, in addition to diffraction peak A or diffraction peaks A and B. This solid electrolyte reduces the formation of hydrogen sulfide yet even further. Also, with this solid electrolyte, the reaction resistance between the solid electrolyte and an active material is reduced yet even further. As a result, a solid-state battery that contains the solid electrolyte of the present invention has an even higher discharge capacity. From the viewpoint of even more markedly realizing these effects, it is preferable that diffraction peak C of the solid electrolyte of the present invention is observed within a range of $2\theta = 22.0° \pm 0.4°$, even more preferably $22.0° \pm 0.3°$, yet even more preferably $22.0° \pm 0.2°$, and yet even more preferably $22.0° \pm 0.1°$.

When both of the diffraction peaks B and C are observed for the solid electrolyte of the present invention in addition to diffraction peak A, the value of the ratio of Ic to $I_B$, $I_C/I_B$, wherein $I_C$ is the intensity of diffraction peak C and $I_B$ is the intensity of diffraction peak B, is more than 0 and 2.0 or less, because the formation of hydrogen sulfide is reduced yet even further. Also, a solid-state battery that contains this solid electrolyte is preferable because the reaction resistance between the solid electrolyte and the active material is reduced yet even further and the discharge capacity is increased even more. From the viewpoint of even more markedly realizing these advantageous effects, the value of $I_C/I_B$ is, for example, more preferably 0.01 or more, and even more preferably 0.02 or more. On the other hand, the value of $I_C/I_B$ is, for example, preferably 1.7 or less, more preferably 1.3 or less, even more preferably 1.0 or less, and yet even more preferably 0.7 or less.

In order to make diffraction peak A be observed for the solid electrolyte of the present invention, for example, a method can be employed in which a sulfide electrolyte raw material and a lithium halide hydrate are mixed to obtain a mixture, and the mixture is then heated to 80°C or more in a vacuum. In the case where this method is employed, the mixing ratio between the sulfide electrolyte raw material and the lithium halide hydrate is such that the amount of lithium halide hydrate is, for example, preferably 5 mass% or more, more preferably 10 mass% or more, even more preferably 20 mass% or more, and yet even more preferably 40 mass% or more with respect to the total amount of the sulfide electrolyte raw material and the lithium halide hydrate. On the other hand, the amount of lithium halide hydrate is, for example, preferably 90 mass% or less, more preferably 80 mass% or less, even more preferably 70 mass% or less, and yet even more preferably 60 mass% or less with respect to the total amount of the sulfide electrolyte raw material and the lithium halide hydrate. The solid electrolyte that is to be obtained contains elemental lithium (Li), elemental phosphorus (P), elemental sulfur (S), an elemental halogen (X), and elemental oxygen (O). In addition, it is preferable that the elemental halogen (X) is at least one of, for example, elemental fluorine (F), elemental chlorine (Cl), elemental bromine (Br), and elemental I (iodine). The sulfide electrolyte raw material contains elemental lithium (Li), elemental phosphorus (P), elemental sulfur (S), and an elemental halogen (X).

The reason why the solid electrolyte of the present invention that is obtained by heating the mixture of the sulfide electrolyte raw material and the lithium halide hydrate in a vacuum reduces the formation of hydrogen sulfide is not completely elucidated. The inventors of the present invention think that one reason may possibly be because a layer that can reduce the formation of hydrogen sulfide is formed on a surface of the sulfide electrolyte raw material. However, the scope of the present invention is not restricted by this theory.

Examples of the lithium halide hydrate include a lithium chloride hydrate, a lithium bromide hydrate, and a lithium iodide hydrate. One of these hydrates may be used alone, or two or more of these hydrates may be used in combination. The lithium halide hydrate may be a monohydrate or a di- or a higher hydrate. From the viewpoint of effectively reducing the formation of hydrogen sulfide, it is preferable that the lithium halide hydrate is a monohydrate.

It is advantageous that mixing of the sulfide electrolyte raw material with the lithium halide hydrate involves grinding. A known grinding means such as, for example, a ball mill or a bead mill can be used to perform the grinding. Preferably, mixing is performed in an atmosphere free from water.

The mixture of the sulfide electrolyte raw material and the lithium halide hydrate is heated in a vacuum as described above. The degree of vacuum in terms of gauge pressure when the atmospheric pressure is 0 Pa is preferably -0.01 MPa or less, more preferably -0.05 MPa or less, and even more preferably -0.1 MPa or less.

For the solid electrolyte of the present invention that is obtained by heating the mixture of the sulfide electrolyte raw material and the lithium halide hydrate in a vacuum, diffraction peak A is observed. The term "heating" means increasing the temperature of an object to at least room temperature, and, in the present invention, it is preferable to increase the temperature to a temperature at which diffraction peak A can be observed. The temperature when heating the mixture in a vacuum can be adjusted as appropriate depending on the other conditions such as the heating time, and may be, for example, but is not limited to, preferably 50°C or more, more preferably 80°C or more, and even more preferably 120°C or more. On the other hand, the heating temperature may be, for example, 200°C or less, 180°C or less, or 150°C or less. Provided that the heating temperature is within the above-described range, the heating time is preferably from 20 minutes to 4 hours, more preferably from 40 minutes to 3 hours, and even more preferably from 1 hour to 2 hours. It is preferable to perform heating under the above-described conditions, because diffraction peak A is likely to be observed for the solid electrolyte of the present invention, and the formation of hydrogen sulfide due to the solid electrolyte is reduced.

Diffraction peak B described in the present invention is a peak that is derived from an argyrodite-type crystal structure. For this reason, in order to make diffraction peak B be observed, it is preferable to adjust the composition of the sulfide solid electrolyte raw material. Also, diffraction peak C described in the present invention is a peak that is derived from the lithium halide hydrate. For this reason, in order to make diffraction peak C be observed, it is preferable to adjust the heating temperature in a vacuum and the amount of lithium halide hydrate.

From the viewpoints of reducing the formation of hydrogen sulfide even further and improving the discharge capacity of a solid-state battery that contains the solid electrolyte of the present invention even more, it is preferable that a reduction in weight of the solid electrolyte of the present invention is observed in thermogravimetry. In particular, it is preferable that a reduction in weight is observed when the solid electrolyte is heated from 25°C to 400°C. It is preferable that, in thermogravimetry, the percentage of weight reduction that occurs within the above-described temperature range is, for example, preferably 1.6% or more, more preferably 2.0% or more, even more preferably 3.5% or more, and yet even more preferably 4.0% or more. On the other hand, the percentage of weight reduction is, for example, preferably 20% or less, more preferably 10% or less, even more preferably 8.0% or less, and yet even more preferably 6.0% or less. In the present invention, when the percentage of weight reduction is within the above-described range, the formation of hydrogen sulfide is reduced yet even further. Also, the discharge capacity of a solid-state battery that contains the solid electrolyte of the present invention is improved yet even more. Thermogravimetry is performed at a temperature increase rate of 10°C/min in an Ar atmosphere. For example, TG-DTA2000SA (product name) manufactured by MAC Science Ltd. can be used to perform the measurement.

The percentage of weight reduction is calculated using the following equation (1):

$$\text{Percentage of weight reduction (wt\%)} = (W_{25} - W_{400})/W_{25} \times 100 \qquad (1)$$

wherein $W_{25}$ represents the weight (g) of a specimen at 25°C, and $W_{400}$ represents the weight (g) of the specimen at 400°C.

A particularly preferable sulfide solid electrolyte that can be used in the present invention is a material that contains a crystalline phase having an argyrodite-type crystal structure, from the viewpoints of reducing the reaction resistance between the sulfide solid electrolyte and the active material even further and improving the discharge capacity of a solid-state battery that contains the solid electrolyte even more. An argyrodite-type crystal structure refers to a crystal structure possessed by a group of compounds derived from a mineral represented by the chemical formula $Ag_8GeS_6$. From the viewpoint of reducing the reaction resistance between the sulfide solid electrolyte and the active material yet even further, it is particularly preferable that the sulfide solid electrolyte having an argyrodite-type crystal structure has a crystal structure belonging to that of cubic crystals.

In the sulfide solid electrolyte that contains a crystalline phase having an argyrodite-type crystal structure, one or two or more elements of, for example, elemental F, elemental Cl, elemental Br, and elemental I can be used as the elemental halogen contained in the sulfide solid electrolyte. From the viewpoint of improving ionic conductivity, it is particularly preferable to use a combination of elemental Cl and elemental Br as the elemental halogen.

From the viewpoint of improving the ionic conductivity even more, it is particularly preferable that the sulfide solid electrolyte that contains a crystalline phase having an argyrodite-type crystal structure is, for example, a compound represented by the compositional formula (I): $Li_aPS_bX_c$, wherein X represents at least one of elemental fluorine (F), elemental chlorine (Cl), elemental bromine (Br), and elemental iodine (I). Preferably, X is one or both of elemental chlorine (Cl) and elemental bromine (Br).

In the above-described compositional formula (I), a represents the molar ratio of elemental Li and is preferably from 3.0 to 6.5, more preferably from 3.5 to 6.3, and even more preferably from 4.0 to 6.0. When a is within this range, the cubic argyrodite-type crystal structure is stable at temperatures near room temperature (25°C), and the lithium ionic conductivity can be improved.

In the compositional formula (I), b represents a value indicating how much smaller the amount of the $Li_2S$ component is than that in the stoichiometric composition. It is preferable that b is from 3.5 to 5.5, more preferably from 4.0 to 5.3, and even more preferably from 4.2 to 5.0, because the cubic argyrodite-type crystal structure is stable at temperatures near room temperature (25°C) and the lithium ionic conductivity is improved.

In the compositional formula (I), c is preferably from 0.1 to 3.0, more preferably from 0.5 to 2.5, and even more preferably from 1.0 to 1.8.

Alternatively, the sulfide solid electrolyte that contains a crystalline phase having an argyrodite-type crystal structure may also be, for example, a compound represented by the compositional formula (II): $Li_{7-d}PS_{6-d}X_d$. A composition represented by the compositional formula (II) is the stoichiometric composition of an argyrodite-type crystalline phase. In the compositional formula (II), X is as defined in the compositional formula (I).

In the compositional formula (II), d is preferably from 0.4 to 2.2, more preferably from 0.8 to 2.0, and even more preferably from 1.2 to 1.8.

Furthermore, the sulfide solid electrolyte that contains a crystalline phase having an argyrodite-type crystal structure may also be, for example, a compound represented by the compositional formula (III): $Li_{7-d-2e}PS_{6-d-e}X_d$. An argyrodite-type crystalline phase that has a composition represented by the formula (III) is, for example, produced by the reaction of an argyrodite-type crystalline phase that has a composition represented by the formula (II) with $P_2S_5$ (diphosphorus pentasulfide). The reaction equation is as follows:

$$Li_{7-d}PS_{6-d}X_d+y/3P_2S_5 \rightarrow Li_{7-d-2e}PS_{6-d-e}X_d+2y/3Li_3PS_4$$

As indicated by the reaction equation, a $Li_3PS_4$ phase is produced along with the argyrodite-type crystalline phase represented by the compositional formula (III). In addition, there are cases where a trace amount of a LiX phase is produced, wherein X is at least one of elemental fluorine (F), elemental chlorine (Cl), elemental bromine (Br), and elemental iodine (I). In the compositional formula (III), X and d are as defined in the compositional formula (II).

In the compositional formula (III), e is a value that indicates a deviation of the $Li_2S$ component from the stoichiometric composition represented by the compositional formula (II). e is preferably from -0.9 to (-d+2), more preferably from -0.6 to (-d+1.6), and even more preferably from -0.3 to (-d+1.0).

In the compositional formula (I), (II), or (III), a portion of P may be replaced with at least one element, or two or more elements, of Si, Ge, Sn, Pb, B, Al, Ga, As, Sb, and Bi. In this case, the compositional formula (I) becomes $Li_a(P_{1-y}M_y)S_bX_c$, the compositional formula (II) becomes $Li_{7-d}(P_{1-y}M_y)S_{6-d}X_d$, and the compositional formula (III) becomes $Li_{7-d-2e}(P_{1-y}M_y)S_{6-d-e}X_d$. M is one or two or more elements selected from Si, Ge, Sn, Pb, B, Al, Ga, As, Sb, and Bi. y is preferably from 0.01 to 0.7, more preferably from 0.02 to 0.4, and even more preferably from 0.05 to 0.2.

Whether or not a sulfide solid electrolyte has an argyrodite-type crystal structure can be confirmed by performing XRD measurement, for example. That is to say, in an XRD measurement that is performed with an X-ray diffractometer (XRD) using CuKα1 radiation, a crystalline phase having an argyrodite-type structure has characteristic peaks at 2θ = 15.34° ± 1.00°, 17.74° ± 1.00°, 25.19° ± 1.00°, 29.62° ± 1.00°, 30.97° ± 1.00°, 44.37° ± 1.00°, 47.22° ± 1.00°, and 51.70° ± 1.00°. Furthermore, a crystalline phase having an argyrodite-type structure also has characteristic peaks at, for example, 2θ = 54.26° ± 1.00°, 58.35° ± 1.00°, 60.72° ± 1.00°, 61.50° ± 1.00°, 70.46° ± 1.00°, and 72.61° ± 1.00°. On the other hand, if a sulfide solid electrolyte does not contain a crystalline phase having an argyrodite-type structure, this can be confirmed by checking that the sulfide solid electrolyte does not have the peaks characteristic of a crystalline phase having an argyrodite-type structure.

A sulfide solid electrolyte having an argyrodite-type crystal structure means that the sulfide solid electrolyte has at least a crystalline phase having an argyrodite-type structure. In the present invention, it is preferable that the sulfide solid electrolyte has a crystalline phase having an argyrodite-type structure as the main phase. The term "main phase" refers to a phase that occupies the largest proportion of the total amount of all of the crystalline phases constituting the sulfide solid electrolyte. Accordingly, the proportion of the crystalline phase having an argyrodite-type structure contained in the sulfide solid electrolyte to all of the crystalline phases constituting the sulfide solid electrolyte is, for example, preferably 60 mass% or more, more preferably 70 mass% or more, even more preferably 80 mass% or more, and yet even more preferably 90 mass% or more. The proportion of a crystalline phase can be confirmed through XRD, for example.

The solid electrolyte of the present invention is in the form of powder, which is a collection of particles. From the viewpoint of improving the ionic conductivity, the cumulative volume particle diameter $D_{50}$ at a cumulative volume of 50 vol% of the solid electrolyte of the present invention as measured through particle size distribution analysis using a laser diffraction and scattering method is, for example, preferably 0.1 μm or more, more preferably 0.3 μm or more, and even more preferably 0.5 μm or more. On the other hand, the cumulative volume particle size $D_{50}$ of the solid electrolyte of the present invention is, for example, preferably 20 μm or less, more preferably 10 μm or less, and even more preferably 5 μm or less. It is preferable that the solid electrolyte has a cumulative volume particle size $D_{50}$ of 0.1 μm or more, because an excessive increase in the total surface area of the powder made of the solid electrolyte is restrained, and therefore, the occurrence of problems such as an increase in resistance and an increase in difficulty in mixing the solid electrolyte with an active material can be effectively restrained. On the other hand, it is preferable that the solid electrolyte has a cumulative volume particle size $D_{50}$ of 20 μm or less, because when, for example, the solid electrolyte of the present invention is used in a combination with another solid electrolyte, the solid electrolyte of the present invention can easily fit into gaps and the like of the other solid electrolyte. As a result, the contact points between the solid electrolytes increase, and the contact areas therebetween also increase, so that the ionic conductivity can be effectively improved.

The solid electrolyte of the present invention can be used, for example, as a material that constitutes a solid electrolyte layer, or in an electrode mixture that contains an active material and constitutes a solid electrolyte layer. Specifically, the solid electrolyte can be used in a positive electrode mixture that contains a positive electrode active material and constitutes a positive electrode layer, or in a negative electrode mixture that contains a negative electrode active material and constitutes a negative electrode layer. Therefore, the solid electrolyte of the present invention can be used in a battery having a solid electrolyte layer, or a so-called solid-state battery. More specifically, the solid electrolyte can be used in a lithium solid-state battery. The lithium solid-state battery may be a primary battery or a secondary battery, but it is particularly preferable that the solid electrolyte is used in a lithium secondary battery. Note that the term "solid-state battery" encompasses, in addition to a solid-state battery that does not contain any liquid substance or gel substance as the electrolyte, a battery that contains a liquid substance or a gel substance as the electrolyte in an amount of, for example, 50 mass% or less, 30 mass% or less, or 10 mass% or less.

The solid electrolyte layer of the present invention can be produced using, for example, a method in which a slurry containing the solid electrolyte, a binder, and a solvent is dripped onto a substrate and leveled off with a doctor blade or the like; a method in which the substrate and the slurry are brought into contact with each other, followed by cutting with an air knife; a method in which a coating is formed through screen printing or the like, and then the solvent is removed through heat drying; or other methods. Alternatively, the solid electrolyte layer can also be produced by pressing a powder of the solid electrolyte of the present invention and then performing appropriate processing. The solid electrolyte layer of the present invention may also contain another solid electrolyte, in addition to the solid electrolyte of the present invention. Typically, the thickness of the solid electrolyte layer of the present invention is preferably from 5 $\mu$m to 300 $\mu$m, and more preferably from 10 $\mu$m to 100 $\mu$m.

The above-described solid-state battery has a positive electrode layer, a negative electrode layer, and a solid electrolyte layer located between the positive electrode layer and the negative electrode layer, and contains the solid electrolyte of the present invention. Examples of the shape of the battery include the shapes of laminate-type, cylindrical, and rectangular batteries.

As the active material contained in the positive electrode mixture, for example, an active material that is used as a positive electrode active material in a lithium secondary battery can be used as appropriate. Examples of such a positive electrode active material include a spinel-type lithium transition metal compound, a lithium metal oxide having a layered structure, and the like. Particles of the positive electrode active material may have, on their surfaces, a coating layer that can reduce the reaction resistance between the solid electrolyte and the positive electrode active material. However, according to the present invention, equivalent effects to those which are obtained by forming a coating layer on the surfaces of the active material particles can be expected, and therefore, an active material without a coating layer can be favorably used as well. The positive electrode mixture may also contain other materials, including a conductive assistant, in addition to the positive electrode active material.

As the active material contained in the negative electrode mixture, for example, an active material that is used as a negative electrode active material in a lithium secondary battery can be used as appropriate. Examples of such a negative electrode active material include lithium metals, carbon materials such as artificial graphite, natural graphite, and non-graphitizable carbon (hard carbon), silicon, silicon compounds, tin, tin compounds, and the like. The negative electrode mixture may also contain other materials, including a conductive assistant, in addition to the negative electrode active material.

Examples

Hereinafter, the present invention will be described in greater detail by means of examples. However, the scope of the present invention is not limited to the examples below.

Example 1

(1) Production of Solid Electrolyte

A $Li_2S$ powder, a $P_2S_5$ powder, a LiCl powder, and a LiBr powder were weighed so that the total amount of the powders was 75 g and the composition $Li_{5.4}PS_{4.4}Cl_{0.8}Br_{0.8}$ was realized. These powders were ground and mixed using a ball mill to obtain a powder mixture. The powder mixture was fired to obtain a fired product having the composition above. The firing was performed using a tubular electric furnace. During the firing, 100% pure hydrogen sulfide gas was circulated in the electric furnace at 1.0 L/min. The firing temperature was set to 500°C, and the firing was performed for 4 hours. The fired product was disintegrated using a mortar and a pestle, and subsequently ground using a wet bead mill to obtain a sulfide electrolyte raw material. As a result of XRD measurement, it was confirmed that this sulfide electrolyte raw material had a crystalline phase of an argyrodite-type structure.

The obtained sulfide electrolyte raw material was mixed with $LiBr \cdot H_2O$ in an Ar atmosphere to obtain a mixture. The amount of $LiBr \cdot H_2O$ added was 10 mass% with respect to the total amount of the sulfide electrolyte raw material and $LiBr \cdot H_2O$. The obtained mixture was heated at 120°C for 1 hour in a vacuum with a gauge pressure of -0.1 MPa, where the atmospheric pressure was taken as 0 Pa. In this manner, an intended solid electrolyte was obtained.

Example 2

A solid electrolyte was obtained in a similar manner to that of Example 1, except that the amount of LiBr·H$_2$O added was 40 mass%.

Example 3

A solid electrolyte was obtained in a similar manner to that of Example 1, except that the amount of LiBr·H$_2$O added was 80 mass%.

Comparative Example 1

A solid electrolyte was obtained in a similar manner to that of Example 1, except that LiBr·H$_2$O was not added.

Evaluation

The solid electrolytes obtained in the examples and the comparative example were subjected to XRD measurement using the following method. Fig. 1 and Table 1 show the results. In addition, the solid electrolytes were subjected to thermogravimetry at a temperature increase rate of 10°C/min, and the percentage of weight reduction of each solid electrolyte when heated from 25°C to 400°C was measured. Furthermore, the amount of produced hydrogen sulfide was measured using the following method. Table 1 shows the results.

XRD Measurement Conditions

The XRD measurement conditions were as follows:

Apparatus: Automated multipurpose X-ray diffractometer, SmartLab, manufactured by Rigaku Corporation
Tube voltage: 40 kV
Tube current: 30 mA
X-ray source: CuKα1
Incident optical element: Confocal mirror (CMF)
Incident slit configuration: Collimator size 1.4 mm × 1.4 mm
Receiving slit configuration: Parallel slit analyzer 0.114 deg, Receiving slit 20 mm
Detector: Scintillation counter
Scan axis: 2θ/θ
Measurement range: 2θ = 20 deg to 40 deg
Step width: 0.01 deg
Scan speed: 1 deg/min
Optics: Concentration method
Incident monochrometer: Johansson type
Non-exposed holder
Maximum intensity: 5,000 counts or more

Peak intensity analysis was performed using PDXL2 (version 2.8.4.0). XRD data was loaded into PDXL2, "Data processing"-"Auto" and "Peak search"-"σ cut value 3.00" were selected, and then "Calculate and Establish" was clicked on. After that, "2θ (deg)" and "Height (counts)" displayed in "Peak list" were set to "Peak positions" and "Peak intensities", respectively. However, if peak at a peak position that will be described later was decomposed into a plurality of peaks, editing ("Remove peaks" and "Add peaks") was performed so as to obtain single peak, and, in the "Optimize" dialog under "Information", the "Refine the background" checkbox was unchecked, and then optimization was performed by clicking on "Execute". After that, the result displayed in "Peak list" was used.

Amount of Produced Hydrogen Sulfide

Within a glove box purged with a sufficiently dried Ar gas (having a dew point of -60°C or less), 2 mg each of the solid electrolytes obtained in the examples and the comparative example was weighed into a metal container, which was then put into a laminated film bag and hermetically sealed.
A 1,000-ml separable flask made of glass was placed in a constant temperature and humidity chamber kept at room temperature (25°C), in an atmosphere that was adjusted by mixing dry air with air and that had a dew point of -30°C, and the separable flask was kept until the environment in the separable flask became the same as the environment in the constant temperature and humidity chamber. Next, the sealed bag containing the solid electrolyte was opened in the constant temperature and humidity chamber, the solid electrolyte was quickly transferred into the separable flask, and then, the separable flask was hermetically sealed. Then, 30 minutes later, to examine hydrogen sulfide that was produced during a period from immediately after sealing to 30 minutes after sealing, 100 ml of the gas in the separable flask was taken out by suction, and the hydrogen sulfide concentration was measured, with the use of a gas detector (GV-100 manufactured by GASTEC Corporation) and a gas detector (No. 4LL manufactured by GASTEC Corporation).

Table 1

| | Amount of LiBr·$H_2O$ added (wt%) | Diffraction peaks | | | $I_A/I_B$ | $I_C/I_B$ | Percentage of weight reduction (wt%) | Amount of produced hydrogen sulfide (ppm) | |
|---|---|---|---|---|---|---|---|---|---|
| | | A | B | C | | | 400°C | Before heating (for reference) | After heating |
| Ex. 1 | 10 | Observed | Observed | Observed | 0.17 | 0.02 | 5.30 | 20.00 | 8.80 |
| Ex. 2 | 40 | Observed | Observed | Observed | 0.25 | 0.61 | 4.72 | 11.25 | 5.00 |
| Ex. 3 | 80 | Observed | Observed | Observed | 0.33 | 0.25 | 4.32 | 4.50 | 0.00 |
| Com. Ex. 1 | 0 | None | Observed | None | - | - | 1.52 | 24.90 | 25.00 |

As is clear from the results shown in Fig. 1, all of the diffraction peaks A, B, and C were observed for the solid electrolytes obtained in the examples.

As is clear from the results shown in Table 1, the amounts of produced hydrogen sulfide of the solid electrolytes obtained in the examples were lower than that of the solid electrolyte obtained in the comparative example.

Industrial Applicability

According to the present invention, a sulfide solid electrolyte that can reduce the formation of hydrogen sulfide is provided.

**Claims**

1. A sulfide solid electrolyte having:

   peak A at $2\theta = 20.7° \pm 0.5°$ in an X-ray diffraction pattern obtained by performing X-ray diffraction measurement using CuK$\alpha$1 radiation,
   peak B at $2\theta = 25.4° \pm 1.0°$ in the X-ray diffraction pattern obtained by performing X-ray diffraction measurement using CuK$\alpha$1 radiation, and
   peak C at $2\theta = 22.0° \pm 0.5°$ in the X-ray diffraction pattern obtained by performing X-ray diffraction measurement using CuK$\alpha$1 radiation,

   wherein a value of a ratio of $I_C$ to $I_B$, $I_C/I_B$, is more than 0 and 2.0 or less, where $I_B$ is an intensity of peak B, and $I_C$ is an intensity of peak C, and
   wherein the sulfide solide electrolyte comprises elemental lithium (Li), elemental phosphorus (P), elemental sulfur (S), an elemental halogen (X), and elemental oxygen (O).

2. The sulfide solid electrolyte according to claim 1,
   wherein the elemental halogen (X) is at least one of elemental chlorine (Cl), elemental bromine (Br), and elemental I (iodine).

3. The sulfide solid electrolyte according to any one of claims 1 to 2,
   wherein a value of a ratio of $I_A$ to $I_B$, $I_A/I_B$, is more than 0, wherein $I_A$ is an intensity of peak A and $I_B$ is the intensity of peak B.

4. The sulfide solid electrolyte, according to any one of claims 1 to 3, having a percentage of weight reduction of 1.6% or more, the percentage of weight reduction being measured by heating the sulfide solid electrolyte from 25°C to 400°C at a temperature increase rate of 10°C/min in thermogravimetry.

5. An electrode mixture comprising the sulfide solid electrolyte according to any one of claims 1 to 4 and an active material.

6. A solid-state battery comprising a positive electrode layer, a negative electrode layer, and a solid electrolyte layer located between the positive electrode layer and the negative electrode layer, and
   the solid electrolyte layer containing the sulfide solid electrolyte according to any one of claims 1 to 4.

7. A method for producing the sulfide solid electrolyte according to claim 1, the method comprising:

   a mixing step of mixing a sulfide electrolyte raw material that contains a crystalline phase having an argyrodite-type crystal structure with a lithium halide hydrate to obtain a mixture; and
   a heating step of heating the mixture to 50°C or more in a vacuum.

**Patentansprüche**

1. Ein sulfidischer Festelektrolyt mit:

   Peak A bei $2\theta = 20{,}7° \pm 0{,}5°$ in einem Röntgenbeugungsmuster, das durch eine Röntgenbeugungsmessung mit CuKα1-Strahlung erhalten wurde,
Peak B bei 2θ = 25,4° ± 1,0° im Röntgenbeugungsmuster, das durch Röntgenbeugungsmessung mit CuKα1-Strahlung erhalten wurde, und
Peak C bei 2θ = 22,0° ± 0,5° im Röntgenbeugungsmuster, erhalten durch Röntgenbeugungsmessung unter Verwendung von CuKα1-Strahlung,
wobei ein Wert eines Verhältnisses von $I_C$ zu $I_B$, I /$I_{CB}$, mehr als 0 und 2,0 oder weniger ist, wobei $I_B$ eine Intensität von Peak B ist und Ic eine Intensität von Peak C ist, und
wobei der Sulfid-Solid-Elektrolyt elementares Lithium (Li), elementaren Phosphor (P), elementaren Schwefel (S), ein elementares Halogen (X) und elementaren Sauerstoff (O) umfasst.

2. Sulfid-Feststoffelektrolyt nach Anspruch 1,
wobei das elementare Halogen (X) mindestens eines von elementarem Chlor (Cl), elementarem Brom (Br) und elementarem I (Iod) ist.

3. Sulfid-Feststoff-Elektrolyt nach einem der Ansprüche 1 bis 2,
wobei ein Wert des Verhältnisses von $I_A$ zu $I_B$, I /$I_{AB}$, größer als 0 ist, wobei $I_A$ die Intensität von Peak A und $I_B$ die Intensität von Peak B ist.

4. Fester Sulfidelektrolyt nach einem der Ansprüche 1 bis 3 mit einer prozentualen Gewichtsverringerung von 1,6 % oder mehr, wobei die prozentuale Gewichtsverringerung durch Erhitzen des festen Sulfidelektrolyten von 25°C auf 400°C bei einer Temperaturerhöhungsrate von 10°C/min in der Thermogravimetrie gemessen wird.

5. Elektrodenmischung, die den sulfidischen Festelektrolyten nach einem der Ansprüche 1 bis 4 und ein aktives Material enthält.

6. Festkörperbatterie mit einer positiven Elektrodenschicht, einer negativen Elektrodenschicht und einer Festelektrolytschicht, die sich zwischen der positiven Elektrodenschicht und der negativen Elektrodenschicht befindet, und wobei die Festelektrolytschicht den Sulfid-Festelektrolyten nach einem der Ansprüche 1 bis 4 enthält.

7. Verfahren zur Herstellung des Sulfid-Feststoffelektrolyten nach Anspruch 1, wobei das Verfahren umfasst:

einen Mischschritt des Mischens eines Sulfidelektrolyt-Rohmaterials, das eine kristalline Phase mit einer Kristallstruktur vom Argyrodit-Typ enthält, mit einem Lithiumhalogenidhydrat, um eine Mischung zu erhalten; und einen Erhitzungsschritt des Erhitzens der Mischung auf 50°C oder mehr in einem Vakuum.

**Revendications**

1. Électrolyte solide sulfuré présentant :

un pic A à 2θ = 20,7° ± 0,5° dans un diagramme de diffraction des rayons X obtenu en effectuant une mesure de diffraction des rayons X en utilisant le rayonnement CuKα1,
le pic B à 2θ = 25,4° ± 1,0° dans le diagramme de diffraction des rayons X obtenu par mesure de diffraction des rayons X à l'aide du rayonnement CuKα1, et
le pic C à 2θ = 22,0° ± 0,5° dans le diagramme de diffraction des rayons X obtenu par mesure de diffraction des rayons X à l'aide du rayonnement CuKα1,
dans lequel la valeur du rapport $I_C/I_B$, $I_C/I_B$, est supérieure à 0 et inférieure ou égale à 2,0, $I_B$ étant l'intensité du pic B et le l'intensité du pic C, et
dans lequel l'électrolyte solide sulfuré comprend du lithium élémentaire (Li), du phosphore élémentaire (P), du soufre élémentaire (S), un halogène élémentaire (X) et de l'oxygène élémentaire (O).

2. Électrolyte solide sulfuré selon la revendication 1,
dans lequel l'halogène élémentaire (X) est au moins l'un des éléments suivants : chlore élémentaire (Cl), brome élémentaire (Br) et I élémentaire (iode).

3. Électrolyte solide sulfuré selon l'une quelconque des revendications 1 à 2,
dans lequel la valeur d'un rapport entre $I_A$ et $I_B$, $I_A/I_B$, est supérieure à 0, $I_A$ étant l'intensité du pic A et $I_B$ l'intensité du pic B.

**4.** Électrolyte solide sulfuré, selon l'une quelconque des revendications 1 à 3, ayant un pourcentage de réduction de poids de 1,6 % ou plus, le pourcentage de réduction de poids étant mesuré en chauffant l'électrolyte solide sulfuré de 25°C à 400°C à une vitesse d'augmentation de la température de 10°C/min en thermogravimétrie.

**5.** Mélange d'électrodes comprenant l'électrolyte solide sulfuré selon l'une des revendications 1 à 4 et un matériau actif.

**6.** Batterie à l'état solide comprenant une couche d'électrodes positives, une couche d'électrodes négatives et une couche d'électrolyte solide située entre la couche d'électrodes positives et la couche d'électrodes négatives, et la couche d'électrolyte solide contenant l'électrolyte solide sulfuré selon l'une quelconque des revendications 1 à 4.

**7.** Méthode de production de l'électrolyte solide sulfuré selon la revendication 1, la méthode comprenant :

une étape de mélange d'une matière première d'électrolyte sulfuré qui contient une phase cristalline ayant une structure cristalline de type argyrodite avec un hydrate d'halogénure de lithium pour obtenir un mélange ; et une étape de chauffage du mélange à 50°C ou plus sous vide.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017352916 A1

- JP 2013030440 A

**Non-patent literature cited in the description**

- **FAN WE et al.** *Nature Comminications,* 2018, vol. 9 (4037

- **ZHANG QING et al.** *Advanced Materials,* 2019, vol. 31 (44), 1901131